(19) Europäisches Patentamt
European Patent Office
Office européen des brevets

(11) Publication number: **0 319 191 B1**

(12) **EUROPEAN PATENT SPECIFICATION**

(45) Date of publication of patent specification: **04.11.92**

(51) Int. Cl.5: **A63B 51/02**

(21) Application number: **88311047.0**

(22) Date of filing: **23.11.88**

(54) **Racket string.**

(30) Priority: **01.12.87 JP 183973/87**

(43) Date of publication of application:
**07.06.89 Bulletin 89/23**

(45) Publication of the grant of the patent:
**04.11.92 Bulletin 92/45**

(84) Designated Contracting States:
**BE DE FR GB IT NL**

(56) References cited:
**EP-A- 0 099 698**
**DE-A- 3 619 447**
**GB-A- 1 569 530**
**US-A- 3 489 641**

(73) Proprietor: **GOSEN CO., LTD.**
**No. 4 Bungo-Machi**
**Higashi-Ku Osaka(JP)**

(72) Inventor: **Murakami, Tadashi**
**1-107, Aza shimo-tokosafu Motojuku-cho**
**Okazaki-shi Aichi(JP)**
Inventor: **Abe, Masashi**
**27-1, Aza Tenjin Showa-cho**
**Okazaki-shi Aichi(JP)**
Inventor: **Kubo, Kouichi**
**15, Tsuruko Shimasaka-cho**
**Okazaki-shi Aichi(JP)**

(74) Representative: **Pacitti, Pierpaolo A.M.E. et al**
**Murgitroyd and Company Mitchell House 333**
**Bath Street**
**Glasgow G2 4ER Scotland(GB)**

**EP 0 319 191 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to a string designed for sports racket for tennis, badminton, squash and the like. More specifically, the present invention relates to a racket string which has long durability and has hitting characteristic like that of a racket string made of natural material such as gut(gut-like hitting property).

A string made of natural material such as sheep gut, whale tendon and the like, was used for sports racket for tennis, badminton, squash and the like for a long time. Increase of the racket-sports-playing population causes a shortage of such a string. Besides, costs for manufacturing the string is rather high. Therefore, nowadays a racket string is popularly made of monofilament of synthetic resin such as polyamide, polyester, polyolefin, polyvinylidene fluoride and the like in place of the natural material.

Among such strings made of the synthetic resin, a string composed of polyamide monofilament has good durability and strength and is most popular. In comparison with a string made of animal gut, however, the string composed of polyamide monofilament has a disadvantage that it is inferior in hitting characteristic such as impact resilience force and impact absorption (or damping capacity) and has more poor playability of players. As shown by curve (A) in Fig. 4, at low level of tension(initial stress), the string composed of poliamide monofilament shows a greater elongation than an animal gut string shown by curve (B) shows.

On the other hand, a string composed of a core-sheath conjugate monofilament of polyamide and polyester prepared by conjugate-spinning method, which is shown by curve (C) in Fig. 4, shows as small an elongation at low level of tension (initial stress) as the animal gut string shown by curve (B). That means the core-sheath conjugate monofilament string is free from the defects of said polyamide monofilament string shown by curve (A) and more analogous to the animal gut string (animal gut-like string) in hitting characteristic. Said conjugate monofilament string has also a good strength. Said conjugate monofilament string is disclosed in the Japanese Utility Model Gazettes (for publication of unexamined application) No 56-26173 and No 56-28358. Said string made of conjugate monofilament of polyamide and polyester has a defect of poor durability due to the peeling between the two layers of polyamide and polyester. The cause of the peeling is that polyamide and polyester are not compatible to each other easily enough to provide good adhesion.

The conjugate monofilament string of polyamide and polyester is disclosed in the prior art document DE-A1 3,619,447 (Gosen Company Limited). Again this conjugate monofilament of polyamide and polyester has a defect of poor durability due to peeling between the two layers due to the polyamide and polyester not being compatible which prevents good adhesion.

### OBJECT OF THE INVENTION

The object of the present invention is to improve the defects of said conventional conjugate monofilament string and to provide a racket string having a good strength and having a balance between durability and animal-gut like hitting characteristic, which are excellent.

### SUMMARY OF THE INVENTION

The present invention provides a racket string comprising at least one conjugate monofilament composed of polyamide and polyester, characterised in that said polyester is obtained by copolymerizing polyol and polybasic acid whose part is isophthalate having a metal sulphonate group.

### BRIEF DESCRIPTION OF THE DRAWINGS

Each of Figs 1(A) to (D) is a cross-sectional view of the first type embodiment of the string of the present invention.

Each of Figs 2(A) to (C) is a cross-sectional view of the second type embodiment of the string of the present invention.

Each of Figs 3(A) and (B) is a cross-sectional view of the third type embodiment of the string of the present invention.

Each of the views shows a cross-section perpendicular to the axis of the string.

Fig. 4 is a graph showing the elongation characteristics of various strings under tensions (stress).

### DETAILED DESCRIPTION OF THE INVENTION

A racket string of the present invention will now be described in detail with reference to the accompanying drawings.

Each of Figs 1(A) to (D) shows a cross-sectional view of the first type embodiment of the string of the present invention. Each of these embodiments is a racket string comprising solely a conjugate monofilament of polyamide and polyester (hereinafter a conjugate monofilament of polyamide and polyester will be described as "a conjugate monofilament" for short). In these embodiments, a conjugate monofilament has a diameter in the range from approx 0.6 to 1.5 mm.

Conjugate forms of the first type embodiments are, for example, as follows.

Double layered form of one-core-one-sheath: As shown in Fig. 1(A), a string has a conjugate form that a core part(1) and a sheath part(2) are united to each other, said core part(1) covered on its outer surface by said sheath part(2).

Several-cores-one-sheath form: As shown in Fig. 1-(B), a racket string has a conjugate form that a plurality of core parts(1) and one sheath part(2) are united to each other, said core parts(1) covered on those outer surfaces by said sheath part(2). The number of said core parts (1) is about 2 to 6.

Triple layered form of one-core-two-sheaths: As shown in Fig. 1(C), a racket string has a conjugate form that a core part(1) and an inner sheath part(2) and outer sheath part(2′) are united to each other, said core part(1) covered on its outer surface by said inner sheath part(2) and said inner sheath part(2) covered on its outer surface by said outer sheath part(2′).

Multiple-cores-one-sheath form: As shown in Fig. 1-(D), a racket string comprises multiple core parts(1) and a sheath part(2), in viewing a cross-section perpendicular to the axis of the string, the core parts(1) being minutely dispersed in the matrix of the sheath part(2), the core parts(1) and the sheath part(2) being united to each other.

A conjugate monofilament employed as a string material in the present invention may be a conjugate monofilament having a core-sheath structure, for example. However, a conjugate monofilament is not limited to a conjugate monofilament having a core-sheath monofilament. A conjugate monofilament having a core-sheath structure may be produced by conventional conjugate-spinning method using conjugate-spinneret. In case that a conjugate monofilament has a core-sheath structure, the core part may be prepared from common polyamide and the sheath part may be prepared from said specific polyester. Or, the core part and the sheath part may be prepared from said specific polyester and common polyamide respectively. In other words, polyamide and said specific polyester may be used for either a core part or a sheath part of a conjugate monofilament having a core-sheath structure. In order for such a string to obtain more desirable animal-gut-like hitting characteristic, it is preferable to use polyamide as said sheath part and said specific polyester as said core part.

And it is also preferable to draw a conjugate monofilament after melt spinning treatment, to about 4.0 to 6.0 times longer in an atmosphere of dry heat or wet heat. After that it may be treated by heat setting: passing it through hot water, etc. In the present invention, some examples of polyamide which can be a material of the conjugate monofilaments are Nylon 6, Nylon 66, Nylon 610, Nylon 11, Nylon 12 and their mutual copolymers-(copolyamides).

In the present invention, the specific polyester to be conjugated with polyamide is a polyester being obtained by copolymerizing polyol and polybasic acid whose part is isophthalate having a metal sulfonate group. The specific polyester is, for example, a substance prepared by copolymerizing preferably 0.5 to 5 mol%, more preferably 0.7 to 3 mol%, of said isophthalate having a metal sulfonate group with and to such common polyester as polyethyleneterephthalate, polybutyleneterephthalate and the like. Such a substance is known as a polyester dyeable with basic dye, and can be obtained by the method disclosed in Japanese Patent Publications (for unexamined patent application) No. 57-210014 and No. 59-26521. Said polybasic acid always comprises said specific isophthalate having a metal sulfonate group, and may further comprise such dicarboxylic acid ester as terephthalate and isophthalate, or such dicarboxylic acid as terephthalic acid and isophthalic acid. As said polyol, for example, such glycol(diol) as polyethylene glycol and polybutylene glycol, and the like.

The isophthalate having a metal sulfonate group is a compound shown by the next formula.

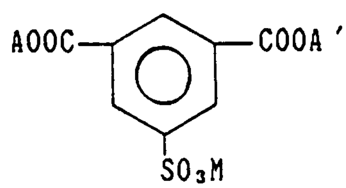

[where A and A′ denote $-CH_3$ or $-(CH_2)nOH$ ("n" is an integer of 2 or more), A and A′ may be the same or different, and M denotes an alkali metal like Na, K, Li.]

Some examples of the specific isophthalate are dimethyl(5-sodiumsulfo)isophthalate, bis-2-hydroxyethyl(5-sodiumsulfo)isophthalate and bis-4-hydroxybutyl(5-sodiumsulfo)isophathalate.

The said specific polyester may be obtained by copolymerizing some substances in addition to said polybasic acid and said polyol for copolymerization to such extent that may not degrade the effects of the present invention. Besides these substances, said polybasic acid and said polyol for copolymerization, the specific polyester may comprise transersterification catalyst, polymerization catalyst, side reaction inhibitor such as phosphorus compound and alkali metal salt, delustering agent such as titanium dioxide, antioxidant, etc. to such extent that may not degrade effects of the present invention.

The copolymerization rate of the said isophthalate having a metal sulfonate group to polybasic acid not having said metal sulfonate group of said polybasic acid is preferably in the range of 0.5 to 5 mol%, especially 0.7 to 3 mol%. That is because, in the range under 0.5% by mol, adhesion between said specific polyester and polyamide may be improved insufficiently. In the range over 5% by mol, melt viscosity of the obtained polyester may become excessively high, consequently it may become difficult to apply melt spinning treatment, and the obtained conjugate monofilament may get a great elongation property at low level tension(initial stress), which causes the degrading of animal-gut-like hitting characteristic.

The conjugate rate of said polyamide and said specific polyester of the conjugate monofilament is preferably that said polyamide is in the range of 5 to 95 %, more preferably 15 to 85 %, by weight and said specific polyester is in the range of the rest.

The conjugate monofilament having the above-mentioned constitution when as shown in Figs. 1(A) to (D) a string consists of said one conjugate monofilament only, as shown by curve (D) in Fig. 4, has as small an elongation at low level of tension-(initial stress) as an animal gut string does, and also have desirable durability due to the preferably improved compatibility and adhesive property between the two layers(between polyamide and said specific polyester).

Conjugate forms of the second type embodiments are, for example, as follows.

These embodiments are shown in Figs. 2(A)-(C). Each of these embodiments is a racket string having a winding-strands-structure using said conjugate monofilaments.

"A racket string having a winding-strands-structure" herein means a string comprising a core and winding strands wound around the core, said core and said strands being adhesively secured to each other, both the core and the winding strands being composed of a monofilament of synthetic resin, and the core and the winding strands having different diameters. Each of these embodiments is characterized in that at least one of the core and winding strands is composed of said conjugate monofilament composed of polyamide and polyester, in which the polyester is obtained from copolymerizing polyol and polybasic acid whose part is isophthalate having a metal sulfonate group. Said conjugate monofilament, for example, may be monofilaments having a core-sheath structure shown in Figs. 1(A)-(D).

A racket string shown in Fig. 2(A) comprises a core (3) composed of a conjugate monofilament having a larger diameter and plural strands (4) composed of a conjugate monofilament having a smaller diameter wherein the strands (4) are tightly wound around said core (3) and the core (3) and the winding strands (4) are adhesively secured to each other with the help of the adhesive layer (5) on the core (3). This string has more preferable hitting restituition characteristic than the strings of embodiments of the first type. A racket string shown in Fig. 2(B) comprises a core (3), an adhesive layer (5) on the core (3) and plural winding strands (4′) on the adhesive layer (5) wherein the winding strands (4′) are adhesively secured to the core (3) with the adhesive layer (5), the core (3) is composed of a thick conjugate monofilament and the winding strands (4′) are composed of a fine monofilament of conventional synthetic material such as polyamide, polyester, polyvinylidene fluoride and the like.

A racket string shwon in Fig. 2(C) comprises a core (3), an adhesive layer (5) on the core (3) and plural winding strands (4) on the adhesive layer (5) wherein the core (3) is composed of a thick monofilament made of conventional synthetic material such as polyamide, polyester, polyvinylidene fluoride and the like, and the winding strands (4) are composed of a fine conjugate monofilament. The core (3) and the winding strands (4) are adhesively secured to each other with the help of the adhesive layer (5).

In an embodiment of the second type of the present invention for example as shown in each of Figs. 2(A) to (C), the conjugate monofilament and the conventional monofilament may be used together for the winding strands.

The diameters of monofilaments employed in the above-explained strings having a winding-strands-structure is preferably in the ranges below:

a monofilament used for a core (3) has preferably a diameter within 0.3 to 1.8mm.

a monofilament used for a winding strand (4) has preferably a diameter within 0.1 to 0.3mm.

Even when in the string of the present invention as shown in Figs. 2(B) and (C), one of the core (3) and the winding strands (4) is composed of said conjugate monofilament, the string can have good durability and animal-gut-like hitting characteristic. Of course, when in embodiments in accordance with Figs. 2(A) to (C), a combination of the conjugate monofilament and the conventional monofilament may be used as winding strands, the strings can have good durability and animal-gut-like hitting characteristic.

Each of Figs. 3(A) and (B) shows an example of a racket string of the third type of the present invention. The string has a twisting-strands-structure.

"A racket string having a twisting-strands-structure" herein means a string comprising plural (generally 2-6) synthetic resin monofilament

strands, which are twisted together and adhesively secured to each other with adhesive. A racket string of the third type of the present invention is characterized in that at least one monofilament of the twisted strands comprising said conjugate monofilament composed of polyamide and polyester, in which the polyester is obtained from copolymerizing polyol and polybasic acid whose part is isophthalate having a metal sulfonate group. Said conjugate monofilament, for example, may be monofilaments having a core-sheath structure shown in Figs. 1(A)-(D).

The string shown in Fig. 3(A) is prepared by twisting three said conjugate monofilaments (6) together with an adhesive layer (5) among them.

The string shown in Fig. 3(B) is prepared by twisting one said conjugate monofilament (6) and two common monofilaments (7) comprising polyamide, polyester, polyvinylidene fluoride and the like with an adhesive layer (5) among them.

The diameter of monofilaments employed in these strings having a twisting-strands-structure is preferably in the range of 0.3 to 0.8 mm in general.

When a racket string of the present invention has also a twisting-strands-structure, the racket string can have improvement effects of durability and animal-gut-like hitting characteristic.

The above-mentioned strings of the first, the second and the third type of the present inventin can have further improved hitting characteristic when a longitudinal bore is constituted in at least one of the conjugate monofilaments and the common monofilaments constituting the core, the winding strand and the twisted strand, and the bore is filled with oil, such as mineral oil.

The core part (1) of strings shown in Figs. 1(A)-(D) may have a longitudinal bore, said bore being filled with the oil.

A synthetic resin layer may be applied on the surface of at least one of a string of the embodiments of the first type, a core and a winding strand of the embodiments of the second type, and a twisted strand of the embodiments of the third type. And such a synthetic resin layer may be composed of polyamide, polyester, polyvinylidene fluoride or polyphenylenesulfide, for example.

Racket strings of the present invention, shown by the above-mentioned embodiments of the first, the second and the third types, comprise at least one conjugate monofilament composed of polyamide and polyester, said polyester being obtained by copolymerization reaction between polyol and polybasic acid whose part is isophthalate having a metal sulfonate group. As a result, the racket strings have desiable hitting property like an animal gut string and excellent durability because said conjugate monofilament has an improved compatibility and adhesive property between said polyamide layer and said polyester layer.

Said conjugate monofilament can exhibit effectively its preferable durability and animal-gut-like hitting characteristic even when the conjugate monofilament is combined with common monofilament as shown in strings of embodiments of the second and the third types. Therefore, a racket string of the present invention, using the conjugate monofilament and the common monofilament at the same time, is superior in durability to and is more like an animal gut string than a racket string consisted of a polyamide monofilament only or a common conjugate monofilament made of polyamide and common polyester in hitting characteristic typical of restitution and damping capacity.

In accordance with the present invention, polyester, which is obtained by copolymerization reaction between polyol and polybasic acid whose part is isophthalate having a metal sulfonate group, is used for conjugate monofilament of polyamide and polyester. A racket string of the present invention composed of said conjugate monofilament has an excellent durability because said conjugate monofilament has a highly improved compatibility and adhesive property between the layers(between said polyamide and said polyester) of said conjugate monofilament.

Said conjugate monofilament of polyamide and said specific polyester has an exellent strength and an animal-gut-like(natural material like) hitting characteristic in itself.

Therefore, a racket string of the present invention has a novel string property that a conventional string does not have, that is, a preferable strength, a highly desirable balance between durability and animal-gut-like hitting characteristic, both of the durability and the hitting characteristic are excellent.

## Claims

1. A racket string comprising at least one conjugate monofilament composed of polyamide and polyester, characterised in that said polyester is obtained by copolymerizing polyol and polybasic acid whose part is isophthalate having a metal sulphonate group.

2. A racket string specified in Claim 1 which comprises a core (3) and winding strands (4) or ($4^1$), said winding strands (4) or ($4^1$) being wound around said core (3), said core (3) and said strands (4) or ($4^1$) being adhesively secured to each other, both said core (3) and said winding strands (4) or ($4^1$) being composed of a synthetic resin monofilament, said core (3) having a diameter different from a diameter of each of said winding strands (4) or ($4^1$), wherein at least one of said core (3) and

said winding strands (4) is composed of said conjugate monofilament.

3. A racket string specified in Claim 1 which comprises plural twisting strands (6) or (7), said twisting strands (6) or (7) twisted together and adhesively secured to each other, said twisting strands (6) or (7) composed of a synthetic resin monofilament, wherein at least one of the twisting strands (6) is composed of said conjugate monofilament.

4. A racket string specified in any one of Claims 1 through 3 in which said conjugate monofilament is a core-sheath conjugate monofilament whose core (1) part is covered on its outer surface by the sheath part (2) or ($2^1$), wherein the core part (1) is composed of said polyester and the sheath (2) or ($2^1$) part is composed of said polyamide.

5. A racket string specified in any one of Claims 1 through 4 in which said polyester is obtained by copolymerizing said polyol and said polybasic acid in a ratio of 0.5 to 5% by mol of said isophthalate to said polybasic acid not having a metal sulfonate group.

**Patentansprüche**

1. Schlägersaite, die wenigstens ein konjugiertes Monofilament aufweist, das aus Polyamid und Polyester besteht, dadurch gekennzeichnet, daß der Polyester durch ein Copolymersisieren von Polyol und einer mehrbasischen Säure erhalten ist, deren Anteil Isophtalat ist, welches eine Metallsulfonat-Gruppe hat.

2. Schlägersaite nach Anspruch 1, welche einen Kern (3) und Wickellitzen (4) oder ($4^1$) aufweist, wobei die Wickellitzen (4) oder ($4^1$) um den Kern (3) herum gewickelt sind, der Kern (3) und die Litzen (4) oder ($4^1$) wechselseitig haftend gesichert sind, sowohl der Kern (3) als auch die Wickellitzen (4) oder ($4^1$) aus einem Kunstharz-Monofilament bestehen und der Kern (3) einen Durchmesser hat, der unterschiedlich von einem Durchmesser jeder der Wickellitzen (4) oder ($4^1$) ist, wobei wenigstens entweder der Kern (3) oder eine der Wickellitzen (4) aus dem konjugierten Monofilament besteht.

3. Schlägersaite nach Anspruch 1, welche eine Vielzahl von gezwirnten Litzen (6) oder (7) aufweist, wobei die gezwirnten Litzen (6) oder (7) zusammengezwirnt und wechselseitig haftend gesichert sind und die gezwirnten Litzen (6) oder (7) aus einem Kunstharz-Monofilament bestehen, wobei wenigstens eine der gezwirnten Litzen (6) aus dem konjugierten Monofilament besteht.

4. Schlägersaite nach einem der Ansprüche 1 bis 3, bei welchem das konjugierte Monofilament ein konjugiertes Kernmantel-Monofilament ist, dessen anteiliger Kern (1) an seiner Außenfläche durch den Mantelteil (2) oder ($2^1$) bedeckt wird, wobei der Kernteil (1) aus dem Polyester und der Mantelteil (2) oder ($2^1$) aus dem Polyamid bestehen.

5. Schlägersaite nach einem der Ansprüche 1 bis 4, bei welchem der Polyester durch ein Copolymerisieren von Polyol und der mehrbasischen Säure in einem Molverhältnis von 0.5 bis 5% des Isophtalats zu der mehrbasischen Säure erhalten wird, welche keine Metallsulfonat-Gruppe hat.

**Revendications**

1. Corde pour raquette comprenant au moins un monofilament à deux composants composé de polyamide et de polyester, caractérisée en ce que ledit polyester est obtenu par copolymérisation de polyol et d'acide polybasique dont une partie est un isophthalate ayant un groupe sulfonate métallique.

2. Corde pour raquette selon la revendication 1, qui comprend une âme (3) et des torons d'enroulement (4) ou ($4^1$), lesdits torons d'enroulement (4) ou ($4^1$) étant enroulés autour de ladite âme (3), ladite âme (3) et lesdits torons (4) ou ($4^1$) étant collés les uns aux autres, ladite âme (3) et lesdits torons d'enroulement (4) ou ($4^1$) étant composés d'un monofilament en résine synthétique, ladite âme (3) ayant un diamètre différent du diamètre de chacun desdits torons d'enroulement (4) ou ($4^1$), dans laquelle l'un au moins de ladite âme (3) et desdits torons d'enroulement (4) est composé dudit filament à deux composants.

3. Corde pour raquette selon la revendication 1 qui comprend des torons à torsions multiples (6) ou (7), lesdits torons de torsion (6) ou (7) étant tordus ensemble et collés les uns aux autres, lesdits torons de torsion (6) ou (7) étant composés d'un monofilament en résine synthétique, dans laquelle au moins l'un desdits torons de torsion (6) est composé dudit filament à deux composants.

4. Corde pour raquette selon l'une quelconque

des revendications 1 à 3, dans laquelle ledit monofilament à deux composants est un monofilament à deux composants à âme gainée dont la partie d'âme (1) est couverte sur sa surface extérieure par la partie gaine (2) ou ($2^1$), dans laquelle la partie d'âme (1) est composée dudit polyester et la partie gaine (2) ou ($2^1$) et composée dudit polyamide.

**5.** Corde pour raquette selon l'une quelconque des revendications 1 à 4 dans laquelle ledit polyester est obtenu en copolymérisant ledit polyol et ledit acide polybasique selon un taux de 0,5 à 5 % par mode dudit isophthalate avec ledit acide polybasique n'ayant pas un groupe sulfonate métallique.

Fig. 1A

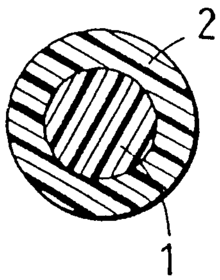


Fig. 1B

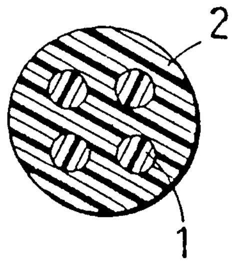


Fig. 1C

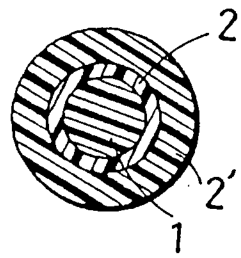


Fig. 1D

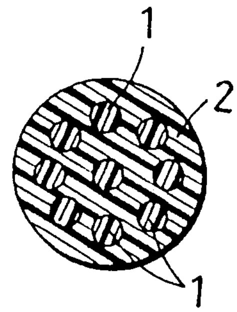


Fig. 2A

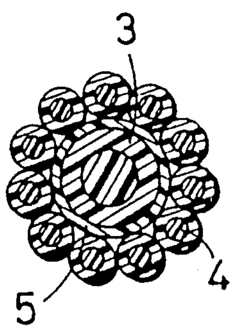


Fig. 2B

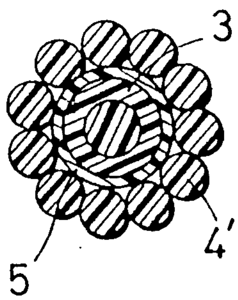


Fig. 2C

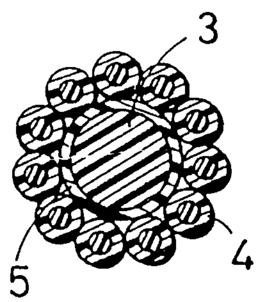


Fig. 3A

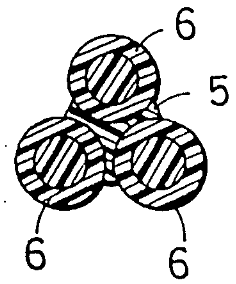


Fig. 3B

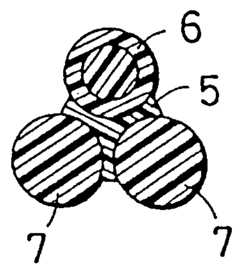

Fig. 4

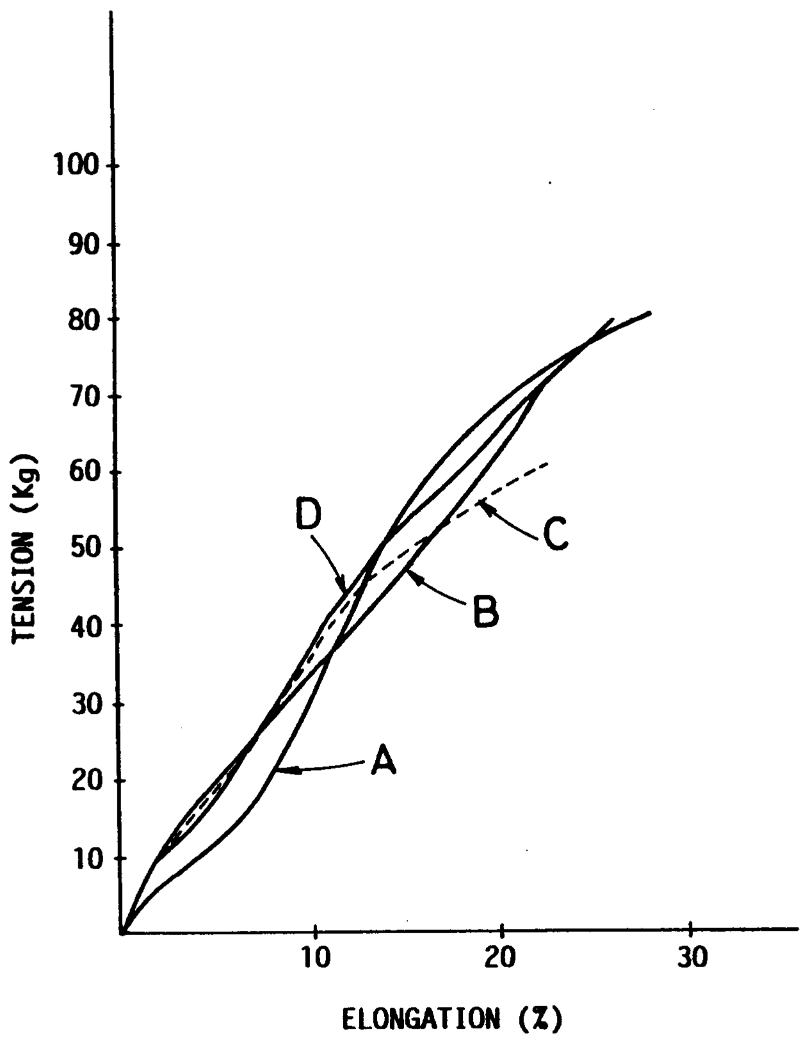
100
90
80
70
60
50
40
30
20
10
TENSION (Kg)
10
20
30
ELONGATION (%)
A
B
C
D